# EUROPEAN PATENT SPECIFICATION

(11) **EP 0 237 440 B1**
(45) Date of publication and mention of the grant of the patent: **29.12.1993**
(21) Application number: 87400563.0
(22) Date of filing: 13.03.1987
(51) Int. Cl.: H01B 7/34

(54) **Flame retardant power and/or telecommunication cable**
Flammenwidriges Leit- und/oder Fernmeldekabel
Câble électrique et/ou de télécommunication, résistant au feu

(30) Priority: 13.03.1986 NO 860949
(43) Date of publication of application: 16.09.1987
(73) Proprietor: ALCATEL STK A/S, N-0508 Oslo 5 (NO)
(72) Inventor: Pedersen, Jack Raymond, N-1500 Moss (NO)
(74) Representative: Weinmiller, Jürgen, Dipl.-Ing.

(56) References cited:
- DE-A- 3 228 119
- GB-A- 2 035 333
- GB-A- 2 059 140
- GB-A- 2 107 720

## Description

The present invention relates to a cable which is suitable for being installed in petrochemical and industrial installations and other high fire risk areas. It is increasingly important in such installations that if cables carrying power and telecommunication signals should be ignited they should be flame retardant and not spread fire.

Many ways have been described in the past to improve the flame retardant properties of cables and conductors. Improvements have also been made with conductor insulation to ensure that the conductors remain insulated from each other even if the organic insulation is completely turned into ashes. A drawback with conventional constructions is that in order to improve the burning characteristics for the total cable, the conductor insulation is filled with materials which impair the electrical properties of the insulation.

Besides it is known, for example from document DE-A-3 228 119, to improve said burning characteristics by using conductor and cable sheaths with a high oxygen index (of at least 40). The main drawback with these types of cables is that their manufacturing is made complex due to the fact that these sheaths are pressure extruded over the cable conductors so that these are covered and embedded in these sheaths.

An object of this invention is to provide a cable (power, signal, instrument, telecommunication or combined) which is improved compared to known cables in that it will have excellent electrical properties and at the same time be flame retardant enough to pass IEEE tests 383, 45 and IEC 332-3, and which does not present the above-mentioned drawback.

Besides there is known, from document GB-A-2 059 140, a flame retardant power and/or telecommunication cable comprising a cable core consisting of at least one multifilament/tape/wire conductor surrounded by conductor insulation having good electrical insulation properties and a limiting oxygen index (LOI) in the range of 17-22 and flame retardant filler material having an LOI higher than 35, the cable core being enclosed within an outer sheath or wrapping, the resulting LOI of the cable being higher than 25.

The main features of the present invention are defined in the claims.

Cables made in accordance with the present invention may be used for a wide range of applications. Such cables may include insulated metal conductors as well as optical fiber conductors.

Above mentioned and other features and objects of the present invention will clearly appear from the following detailed description of embodiments of the invention taken in conjunction with the drawings, where,
- Fig. 1 shows a multiconductor cable,
- Fig. 2 shows a cable having coaxial design, and
- Fig. 3 illustrates one embodiment of a filler element.

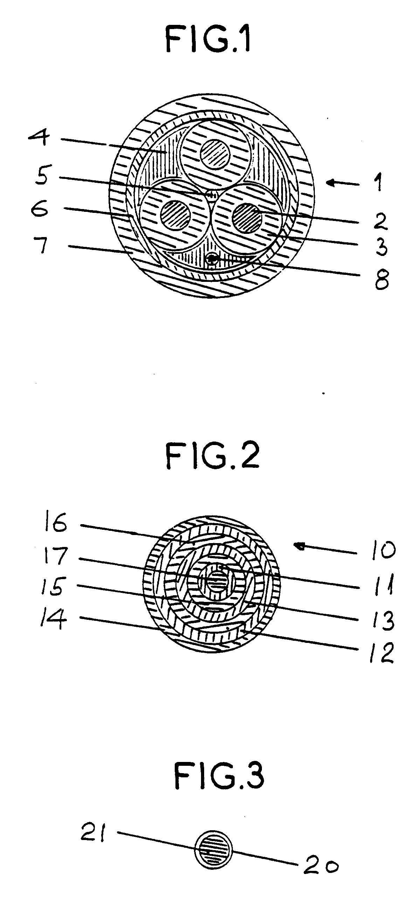

Figure 1 illustrates a cable 1 having a number of conductors 2 insulated with a material 3 having good electrical insulation properties such as PE, PEX, and EPR.

Unfortunately these materials have a low LOI (limiting oxygen index), in the order of 17-20. These materials can be modified to give an oxygen index of 20-22 and will be acceptable for cable constructions with strict requirements on electrical properties. In order to further improve the flame propagation retardance of the cable a number of filler elements or the like 4, 5 are stranded into the cable core together with the insulated conductors. In this way the electrical properties are retained and the cable gives less fire propagation. The elements 4 may take the form of a filler sheath. The materials of the filler element have a high LOI in the order of 35-60 so that if the cable is subjected to high temperatures, - gases like H₂O, CO₂ will be emitted from the filler element thus cooling the cable core. A preferable material of the filler elements is a polyolefin copolymer such as EPDM, EVA, EEA, EBA, etc. filled with inorganic materials giving off H₂O in fire, such as aluminium tri hydroxide (ATH). The filler elements are also halogen free. The cable may be provided with a screen 6 and it should have at least one outer sheath 7. Fiberoptic elements 8 may be included in the cable. The outer sheath 7 needs not have excellent electrical properties, but it should have sufficient mechanical strength and good flame retardant properties. The material of the outer sheath could be polyolefin (EPR, EVA, etc.) with a LOI of 25-35.

The weight of the filler element material mentioned as compared to the weight of the other plastic or rubber materials used in the cable could be in the order of 50/50. If the LOI of the sheath is high, the weight of the filler element material may be reduced correspondingly. Typical filler elements (round or shaped) should have a diameter of 1-20 mm and be stranded into the cable core together with the insulated conductors and/or optical fibers. The "final" LOI of the cable should be in the range of 25 to 40, high enough for the cable to satisfy the IEC 332-3 category C flame propagation test.

Figure 2 illustrates an alternative embodiment of the invention. The cable 10 may have a coaxial design with an inner concentric conductor 11 of annealed copper wires/tapes,- an outer conductor or screen 12 of braided annealed copper wires,- layers of PEX insulation 13 and an outer crosslinked PEX sheath 14. This type of cable is in particular suitable for transferring high voltage (25kV) power at a frequency of 25 kHz. One or more fire resistant tapes (not shown) may be placed directly underneath the outer sheath 14. The outer sheath should have an LOI in the range of 25 to 35. Over the conductor 11 and over the insulation 13 there may in a conventional manner be arranged semiconducting layer 15 and 16 respectively. In accordance with the present invention there is arranged a preferably compact extruded thermoplastic or crosslinked string or core 17 within the multifilament/tape/wire conductor 11. This inner filler element or core could be made of a crosslinked rubber based material such as EPR or EVA with one or more strength members (e.g. glass fibers) embedded in the rubber material and it should have a high LOI (above 35) corresponding to that chosen for the filler elements in Figure 1 and it should be halogen free. The resulting LOI of the cable will then be in the range of 25 to 40.

Two or more of the cables described may be stranded together (not shown) within a common outer sheath of filled flame retardant halogene free polyolefin based polymer. The above described cable types have passed the following tests: IEC 332-1 and IEC 332-3.

The material which is usually used to give a high LOI, like ATH, has poor mechanical properties. Filler elements may be made by extruding strings from a plastic/rubber material containing the required amount of ATH and the like, but the higher the ATH content is, the more difficult will the extrusion process be. An alternative is to extrude a thin tube 20 of filled flame retardant EVA over a string 21 of mass containing ATH, as illustrated in Fig. 3. During a fire the mass will form and give off H₂O thus cooling the cable core. The filler 4 in Figure 1 may be constituted by several elements of this type. With flexible tube material 20 these elements may be formed to the desired form within the cable core.

The above detailed description of embodiments of this invention must be taken as examples only and should not be considered as limitations on the scope of protection.

## Claims

1. Flame retardant power and/or telecommunication cable (1; 10) comprising a cable core consisting of at least one multifilament/tape/wire conductor (2; 11) surrounded by conductor insulation (3 ; 13) having good electrical insulation properties and a limiting oxygen index (LOI) in the range of 17-22 and flame retardant filler material (4, 5; 17) having an LOI higher than 35, the cable core being enclosed within an outer sheath or wrapping (7; 14), the resulting LOI of the cable being higher than 25, characterized in that the flame retardant filler material is in the form of at least one prefabricated filler element (4, 5; 17; 20/21) which in the case of a multiconductor cable is stranded into the cable core together with the cable conductors (2) and in the case of a cable having a coaxial design is arranged within the centre conductor (11) of the cable.

2. Cable according to claim 1, characterized in this that the prefabricated filler elements (4, 5, 17, 20/21) have a LOI in the range of 35 to 60 and comprises an extruded enclosing layer (20) of flame retardant EVA over a string (21) of mass containing ATH.

3. Cable according to claim 1 or 2, characterized in this that the weight of the filler element material, - as compared to the weight of the plastic or rubber material of the conductor insulation, the semiconductors and the protective sheaths, - is in the order of 50%.

4. Cable according to claim 1, characterized in this that it includes two or more insulated concentric conductors twisted together or laid in parallel within a common sheath.

5. Cable according to claim 1 or 2, characterized in this that the filler elements (4, 5, 17, 20/21) include one or more reinforcing element such as glas fibres.

## Patentansprüche

1. Flammwidriges Energie- und/oder Fernmeldekabel (1; 10) mit einem Kabelkern aus mindestens einem Mehrfach/Band/Draht-Leiter (2; 11), der von Isoliermaterial (3; 13) mit guten elektrischen Isoliereigenschaften mit einem Sauerstoffindex (LOI) im Bereich von 17-22 und einem flammwidrigen Füllmaterial (4, 5; 17) mit einem Sauerstoffindex höher als 35 umgeben ist, wobei der Kabelkern von einem Außenmantel (7; 14) eingeschlossen ist und der resultierende Sauerstoffindex des Kabels höher als 25 ist,
**dadurch gekennzeichnet,** daß das flammwidrige Füllmaterial die Form von mindestens einem vorgefertigtem Füllerelement (4, 5; 17; 20/21) besitzt, welches im Falle eines mehradrigen Kabels in den Kabelkern zusammen mit den Leitern (2) verseilt ist und im Falle eines Kabels mit koaxialem Aufbau im mittleren Leiter (11) eingebracht ist.

2. Kabel nach Anspruch 1, dadurch gekennzeichnet, daß das vorgefertigte Füllerelement (4, 5, 17, 20/21) einen Sauerstoffindex von 35 bis 60 hat und aus einem Strang (21) mit einer ATH enthaltenden Masse besteht, der von einer extrudierten Schicht (20) aus flammwidrigem EVA umgeben ist.

3. Kabel nach Anspruch 1 oder 3, dadurch gekennzeichnet, daß das Gewicht des Materials des Füllerelements - verglichen mit dem Gewicht von Plastik- oder Gummimaterial der Isolierung der Leiter, der halbleitenden und der schützenden Mäntel - im Bereich von 50 % ist.

4. Kabel nach Anspruch 1, dadurch gekennzeichnet, daß es zwei oder mehr isolierte konzentrische Leiter enthält, die miteinander verdrillt sind oder parallel in einem gemeinsamen Mantel liegen.

5. Kabel nach den Ansprüchen 1 oder 2, dadurch gekennzeichnet, daß die Füllerelemente (4, 5; 17; 20/21) ein oder mehrere Verstärkungselemente aus beispielsweise Glasfasern enthalten.

## Revendications

1. Câble (1 ; 10) d'énergie et/ou de télécommunications ignifuge comprenant une âme consistuée d'au moins un conducteur multibrins/ruban/fil (2 ; 11) entouré d'une isolation de conducteur (3 ; 13) ayant de bonnes propriétés d'isolation électrique et un indice limite d'oxygène (ILO) compris entre 17 et 22, et un matériau de remplissage ignifuge (4, 5 ; 17) ayant un ILO supérieur à 35, l'âme du câble étant entourée d'une gaine extérieure ou emballage (7 ; 14), l'ILO résultant du câble étant supérieur à 25, caractérisé en ce que le matériau de remplissage ignifuge se trouve sous la forme d'au moins un élément de remplissage préfabriqué (4, 5 ; 17 ; 20/21) qui, dans le cas d'un câble multiconducteur, est toronné dans l'âme du câble avec les conducteurs du câble (2), et dans le cas d'un câble ayant une structure coaxiale est disposé à l'intérieur du conducteur central (11) du câble.

2. Câble selon la revendication 1, caractérisé en ce que les éléments de remplissage préfabriqués (4, 5 ; 17 ; 20/21) ont un ILO compris entre 35 et 60 et comportent une couche extrudée extérieure (20) d'EVA ignifuge au-dessus d'un cordon (21) massif contenant du THA.

3. Câble selon l'une des revendications 1 ou 2, caractérisé en ce que la masse du matériau de l'élément de remplissage comparée à la masse du matériau plastique ou élastomérique des isolants des conducteurs, des semi-conducteurs et des gaines de protection, est de l'ordre de 50%.

4. Câble selon la revendication 1, caractérisé en ce qu'il comprend deux ou plusieurs conducteurs isolés concentriques torsadés ensemble ou disposés parallèlement à l'intérieur d'une gaine commune.

5. Câble selon l'une des revendications 1 ou 2, caractérisé en ce que les éléments de remplissage (4, 5 ; 17 ; 20/21) comprennent un ou pusieurs éléments de renforcement comme des fibres de verre.
